# FASCICULE DE BREVET EUROPEEN

(11) **EP 4 217 266 B1**
(45) Date de publication et mention de la délivrance du brevet: **06.12.2023**
(21) Numéro de dépôt: 22730778.2
(22) Date de dépôt: 23.05.2022
(51) Int. Cl.: B63B 32/64

(54) **AILERON DE PLANCHE DE NAUTISME MUNI D'UNE CHARNIERE AUTOBLOQUANTE EN UNE POSITION DE DERIVE ET UNE POSITION RABATTUE**
WASSERBRETTFLOSSE MIT EINEM SCHARNIER MIT SELBSTVERRIEGELUNG IN EINER STABILISIERUNGSPOSITION UND EINER GEFALTETEN POSITION
WATER BOARD FIN PROVIDED WITH A HINGE WHICH IS SELF-LOCKING IN A STABILIZING POSITION AND A FOLDED POSITION

(30) Priorité: 11.06.2021 FR 2106205
(43) Date de publication de la demande: 02.08.2023
(73) Titulaire: EQUIP CLUB SA, 1180 Rolle (CH)
(72) Inventeur: SCHMÄH, Daniel, 1163 Etay (CH)
(74) Mandataire: Gaglione, Renaud
(86) Numéro de dépôt international: PCT/EP2022/063928
(87) Numéro de publication internationale: WO 2022/258357

(56) Documents cités:
- EP-A1- 0 034 990
- DE-A1- 10 213 447
- US-B1- 9 487 276

## Description

L'invention se rapporte à un aileron destiné à un objet de navigation, notamment une planche de nautisme gonflable ou à coque rigide, par exemple un surf, un paddle, ou encore une planche à voile. L'objet de navigation comprend une aile mobile par rapport à une base de fixation autour d'un axe de rotation entre une première position dite « de dérive » et une deuxième position dite « rabattue » et des moyens de blocage en rotation pour bloquer l'aile dans la position rabattue, l'axe de rotation étant porté par deux composants de charnière dont l'un est fixé à l'aile et l'autre à la base de fixation, le composant de charnière fixé à l'aile étant également mobile en translation par rapport au composant de charnière fixé à la base de fixation pour débloquer l'aile.

Un aileron de ce type est divulgué par le document US 9 487 276. Les moyens de blocage comprennent un cran porté par le composant de charnière fixé à la base de fixation coopérant avec une ouverture ménagée dans l'aile pour débloquer l'aile de la position rabattue, sous l'action d'un ressort de torsion monté suivant l'axe de rotation. L'ouverture est mise en correspondance avec le cran au moyen de la translation du composant de charnière fixé à l'aile. A noter que le ressort de torsion n'est pas sollicité au cours de la translation, étant encagé dans un logement du composant de charnière fixé à la base de fixation. Une fois débloquée de la position rabattue, l'aile est libre en rotation contre la déformation du ressort de torsion pour adapter l'effort de dérive aux lignes de courant d'eau.

Le document WO 2005/105566 divulgue un aileron d'un autre type, dans lequel les deux composants de charnière bloquent tout mouvement en translation de l'aile par rapport à la base de fixation. La base de fixation de l'un des composants de charnière est insérée dans un boitier de l'objet de navigation. L'autre composant de charnière fixé à l'aile est mobile entre trois positions angulaires définies par une réglette, insérée entre les deux composants suivant l'axe de rotation. La réglette permet de bloquer l'aile dans l'une ou l'autre des trois positions angulaires.

D'autres exemples de ce type d'aileron sont fournis par les documents US 5664979 et US 5813890, dans lesquels l'aile est mobile entre deux positions angulaires, définies par une butée portée par le composant de charnière fixé à la base de fixation. Entre ces deux positions, l'aile est là encore, libre en rotation contre la déformation en torsion d'un ressort pour adapter l'effort de dérive aux lignes de courant d'eau. Le document WO 2012/009753 divulgue un aileron analogue.

Le document DE 102 13 44 divulgue un aileron dont la base de fixation est fixée à la coque même de l'objet de navigation. Le moyen élastique est comprimé pour bloquer l'aile dans la position de dérive et non pour la débloquer. Les moyens de blocage sont portés par le composant de charnière fixé à la coque du bateau et par une extrémité du composant de charnière fixé à l'aile. Le moyen élastique est disposé à cette même extrémité et est comprimé par un câble de traction, relié à l'extrémité opposée par un bouchon. Lors d'une détente du câble, manoeuvré par un utilisateur, le moyen élastique se détend également pour découpler les deux composants de charnière et permettre une rotation de l'aile. L'aileron peut être retiré de la coque du bateau, à condition de dégager le bouchon du composant de charnière fixé à l'aile pour libérer le câble de traction.

Le document US 1 703 868 divulgue un autre aileron dont la base de fixation est constituée par la coque même de l'objet de navigation, en l'occurrence un canot à moteur. L'aile est manoeuvrée entre la position de dérive et la position rabattue par un levier solidaire de l'axe de rotation et les moyens de blocage en rotation pour bloquer l'aile dans la position de dérive sont fixés à la coque. La position rabattue correspond à une position d'amarrage ou de faible profondeur d'eau et est stable.

Enfin, le document EP 0 034 990 divulgue un aileron dont l'aile est mobile entre une position de dérive et une position rabattue, uniquement en rotation autour d'un axe de rotation s'étendant perpendiculairement à une direction longitudinale de la base de fixation.

L'un des buts de l'invention est ainsi de modifier un aileron du type rappelé en introduction, en vue de permettre la rotation de l'aile entre deux positions angulaires stables, l'aileron étant compatible avec une base de fixation amovible.

A cet effet, l'invention a pour objet un aileron destiné à un objet de navigation, notamment une planche de nautisme gonflable ou à coque rigide, comprenant une aile mobile par rapport à une base de fixation, autour d'un axe de rotation entre une première position dite « de dérive » et une deuxième position dite « rabattue » et des moyens de blocage en rotation pour bloquer l'aile dans la position rabattue, l'axe de rotation étant porté par deux composants de charnière dont l'un est fixé à l'aile et l'autre à la base de fixation, le composant de charnière fixé à l'aile étant également mobile en translation par rapport au composant de charnière fixé à la base de fixation pour débloquer l'aile, caractérisé en ce que les moyens de blocage en rotation sont portés par les deux composants de charnière pour bloquer l'aile dans la position rabattue et dans la position de dérive et qu'il comprend un moyen élastique se déformant en compression ou en flexion, contre la translation du composant de charnière fixé à l'aile débloquant l'aile de la position de dérive.

L'axe de rotation s'étend parallèlement à une direction longitudinale de la base de fixation.

Le moyen élastique permet de maintenir l'aile bloquée en rotation dans la position de dérive tout en permettant de la déplacer en translation, contre la déformation en flexion ou en compression du moyen élastique pour la débloquer.

Selon un premier mode de réalisation de l'invention, le moyen élastique est un ressort de compression monté autour de l'axe de rotation, entre une première partie du composant de charnière fixé à la base de fixation et le composant de charnière fixé à l'aile et opposé aux moyens de blocage en rotation, portés par le composant de charnière fixé à l'aile et par une deuxième partie du composant de charnière fixé à la base de fixation, ledit ressort se déformant en compression contre la translation du composant de charnière fixé à l'aile pour débloquer l'aile de la position en dérive ou de la position rabattue.

Dans ce mode de réalisation, l'aile est manoeuvrée en translation suivant l'axe de rotation contre la compression du ressort, jusqu'à une position libre en rotation pour laquelle les moyens de blocage sont débloqués l'un par rapport à l'autre. Ces moyens définissent deux positions stables en rotation, la position de dérive et la position rabattue, angulairement distinctes de 90° de préférence.

Selon un deuxième mode de réalisation de l'invention, le moyen élastique est un bras de flexion porté par le composant de charnière fixé à l'aile, l'un et l'autre de ces deux éléments étant percés d'une lumière oblongue dans laquelle est inséré l'axe de rotation, les moyens de blocage du composant de charnière fixé à l'aile étant portés par le bras de flexion, qui se déforme en flexion, contre la translation du composant de charnière fixé à l'aile, pour débloquer l'aile de la position en dérive et contre une rotation autour de l'axe de rotation, pour débloquer l'aile de la position rabattue.

Dans ce mode de réalisation, l'aile est manoeuvrée en translation suivant la lumière oblongue jusqu'à une position libre en rotation, pour laquelle les moyens de blocage sont débloqués l'un par rapport à l'autre. Ces moyens définissent là encore deux positions stables en rotation, la position de dérive et la position rabattue, angulairement distinctes de 90° de préférence.

Dans l'un ou l'autre mode de réalisation, l'aile peut être manoeuvrée entre les deux positions de blocage en rotation, dont l'une correspond à la position de dérive lorsque la hauteur d'eau sous l'objet de navigation est suffisante, et l'autre, à la position rabattue, de préférence à 90°, lorsque la profondeur d'eau fait défaut.

Le moyen élastique confère ainsi à l'aileron une propriété autobloquante, par laquelle les deux composants de charnière bloquent l'aile par rapport à la base de fixation, indépendamment de l'objet de navigation sur lequel l'aileron est monté. Autrement dit, l'aileron selon l'invention peut être manoeuvré entre deux positions angulaires stables, l'une en dérive et l'autre rabattue, en étant assemblé d'une façon amovible à l'objet de navigation, particulièrement sur une planche de nautisme gonflable ou à coque rigide.
Figure 1 illustre un premier mode de réalisation d'un aileron selon l'invention.
Figure 2 est une vue de détail de moyens réciproques de blocage en rotation portés par un composant de charnière fixé à une base de fixation de l'aileron.
Figure 3 est une vue de détail de moyens de blocage en rotation portés par un composant de charnière fixé à l'aile de l'aileron.
Figure 4 est une vue de détail de deux composants de charnière de l'aileron, dans une position bloquée en rotation pour laquelle l'aile de l'aileron est en position de dérive.
Figure 5 est une vue de détail de deux composants de charnière de l'aileron, dans une position bloquée en rotation pour laquelle l'aile de l'aileron est en position rabattue.
Figure 6 est une vue de détail de deux composants de charnière de l'aileron, dans une position débloquée en rotation.
Figure 7 illustre un assemblage entre l'aileron et une planche de sport nautique gonflable, l'aile étant en position de dérive.
Figure 8 illustre un assemblage entre l'aileron et une planche de sport nautique à coque rigide, l'aile étant en position de dérive.
Figure 9 illustre un assemblage entre l'aileron et une planche de sport nautique gonflable, l'aile étant en position rabattue.
Figure 10 illustre un assemblage entre l'aileron et une planche de sport nautique à coque rigide, l'aile étant en position rabattue.
Figure 11 illustre un deuxième mode de réalisation d'un aileron selon l'invention.
Figure 12 est une vue de détail de deux composants de charnière de l'aileron, dans une position bloquée en rotation dans laquelle une aile de l'aileron est dans une position de dérive.
Figure 13 est une vue de détail de deux composants de charnière de l'aileron, dans une position bloquée en rotation dans laquelle une aile de l'aileron est dans une position rabattue.
Figure 14 est une vue de détail de deux composants de charnière de l'aileron, dans une position débloquée en rotation.
Figure 15 illustre un autre assemblage entre l'aileron et une planche de sport nautique gonflable selon le premier mode de réalisation, l'aile étant en position de dérive.
Figure 16 illustre un autre assemblage entre l'aileron et une planche de sport nautique gonflable selon le deuxième mode de réalisation, l'aile étant en position de dérive.

Il convient de noter que dans l'exposé qui suit, un même élément porte la même référence sur l'une ou l'autre des figures.

Un aileron destiné à un objet de navigation, notamment une planche de nautisme gonflable ou à coque rigide, comprend, selon les différents modes de réalisation, une aile 1 mobile par rapport à une base de fixation 3 autour d'un axe de rotation A1, entre une première position dite « de dérive » et une deuxième position dite « rabattue ». L'aileron comprend également des moyens de blocage en rotation 15, 17 ; 35, 37 pour bloquer l'aile 1 dans la position de dérive. L'axe de rotation A1 est porté par deux composants de charnière 5 et 7. L'un 5 est fixé à l'aile 1 et l'autre 7, à la base de fixation 3. Le composant de charnière 5 fixé à l'aile 1 est également mobile en translation par rapport au composant de charnière 7 fixé à la base de fixation 3 pour débloquer l'aile 1 de la position de dérive.
L'axe de rotation A1 s'étend parallèlement à une direction longitudinale L de la base de fixation.

Selon l'invention, les moyens de blocage en rotation 15, 17 ; 35, 37 sont portés par les deux composants de charnière 5, 7 pour bloquer l'aile dans la position de dérive et dans la position rabattue. L'aileron comprend également un moyen élastique 11, 31 se déformant en compression ou en flexion pour exercer une force de rappel sur le composant de charnière 5 fixé à l'aile 1, contre la translation par rapport au composant de charnière 7 fixé à la base de fixation 3 débloquant l'aile 1 de la position de dérive.

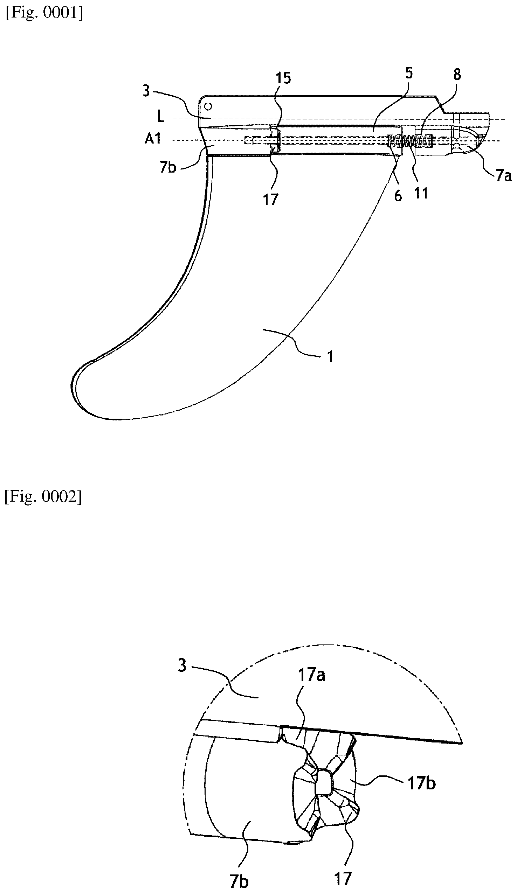

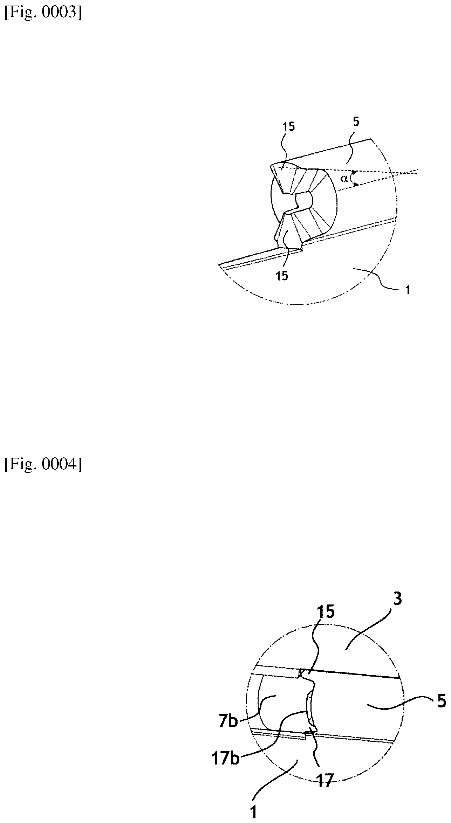

Suivant un premier mode de réalisation, Fig. 1, le moyen élastique est un ressort de compression 11 monté autour de l'axe de rotation A1, entre une première partie 7a du composant de charnière 7 fixé à la base de fixation 3 et le composant de charnière 5 fixé à l'aile 1. Des moyens réciproques 15, 17 de blocage en rotation sont portés, Fig. 2 et 3, par le composant de charnière 5 fixé à l'aile 1 et par une deuxième partie 7b du composant de charnière fixé à la base de fixation 3 et sont disposés en opposition au ressort de compression 11. Autrement dit, le ressort de compression 11 est reçu dans un logement 6 du composant de charnière 5 fixé à l'aile 1 et dans un logement 8 du composant de charnière 7 fixé à la base de fixation 3, tandis que les moyens réciproques 15, 17 de blocage en rotation portés par chaque composant de charnière sont opposés aux logements 6, 8 respectivement.

Les moyens réciproques 15 de blocage portés par le composant de charnière 5 fixé à l'aile 1 comprennent, Fig. 2, des reliefs en saillie, en correspondance de forme, Fig. 3, avec des reliefs en creux 17a, 17b des moyens de blocage 17 portés par la première partie 7a du composant de charnière 7 fixé à la base de fixation 3. La correspondance de forme permet un blocage efficace en rotation des deux composants de charnière.

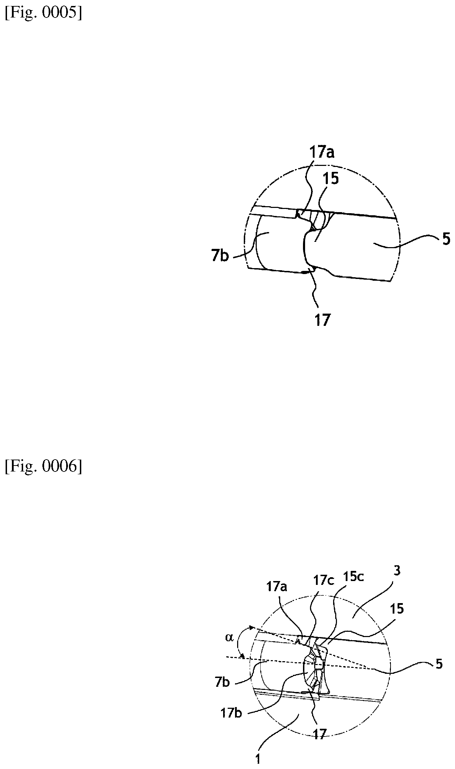

De préférence, les reliefs en saillie portés par le composant de charnière 5 fixé à l'aile 1 présentent une symétrie d'ordre deux, tandis que les reliefs en creux portés par la première partie 7a du composant de charnière 7 fixé à la base de fixation 3 présentent à la fois une symétrie d'ordre deux et une alternance entre un premier type 17a et un deuxième type 17b de relief en creux, définissant respectivement les deux positions de blocage en rotation, en dérive et rabattue, l'une perpendiculairement à l'autre. De préférence encore, les reliefs en creux du deuxième type 17b sont moins étendus suivant la direction de l'axe de rotation A1, que ceux du premier type 17a, pour faciliter la manoeuvre en rotation, de la position rabattue à la position de dérive. Autrement dit, la compression du ressort 11 est moindre pour déplacer en translation le composant de charnière 5 fixé à l'aile 1 dans une position libre en rotation, Fig. 6, à partir de la position rabattue, Fig. 5, qu'à partir de la position de dérive, Fig. 4.

D'une façon avantageuse, les reliefs en creux 17a, 17b et les reliefs en saillie 15 s'étendent suivant des arêtes 17c, 15c inclinées d'un angle alpha par rapport à la direction de rotation A1, Fig. 3 et Fig. 6, pour combiner une manoeuvre en rotation de l'aile 1 suivant l'axe de rotation A1, avec un déplacement en translation des deux composants de charnière 5, 7 l'un par rapport à l'autre permettant de débloquer l'aile 1 de la position de dérive ou de la position rabattue. Cet agencement confère ainsi à l'aileron un seuil de blocage en rotation, au-delà duquel l'aile 1 est débloquée de la position de dérive ou de la position rabattue avant de risquer d'être brisée ou d'endommager les composants de charnière.

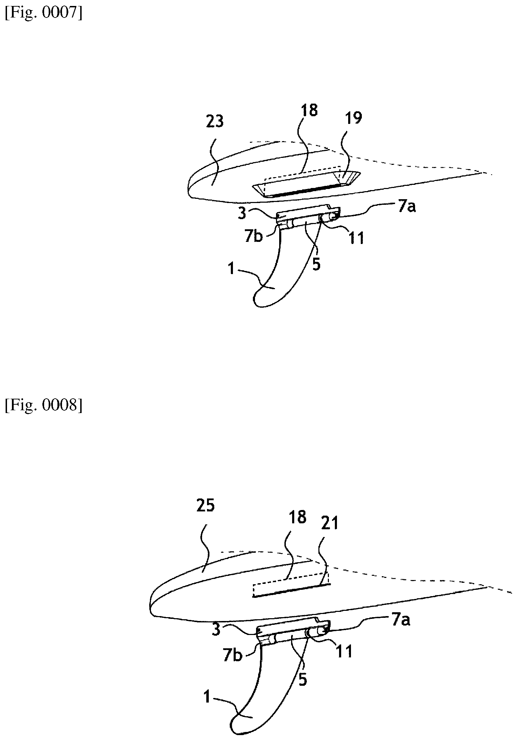

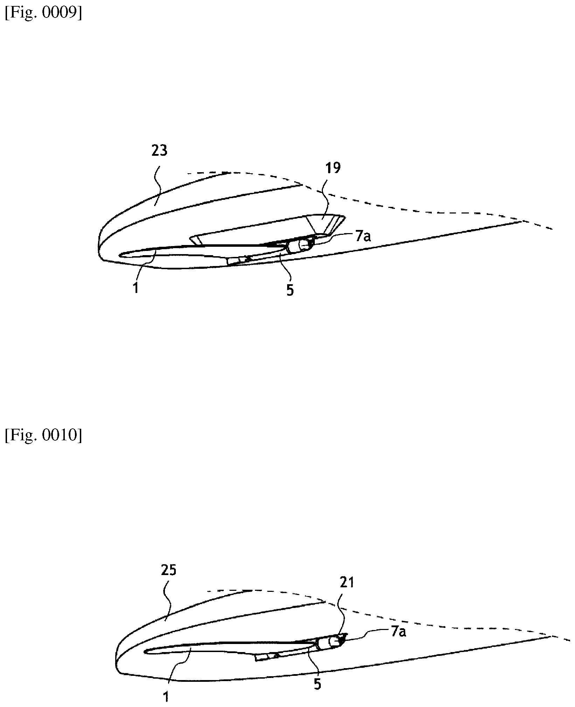

L'aileron est plus particulièrement destiné à une planche de sport nautique gonflable 23 ou à coque rigide 25. Figures 7 et 8, il est assemblé au moyen d'un boîtier 19, respectivement 21, intégré à la planche de sport nautique 23, respectivement 25. Le boîtier 19, 21 est pourvu d'un logement 18 dans lequel la base de fixation 3 est insérée au moment de l'assemblage. Le logement 18 s'étend dans un plan perpendiculaire à la planche de sport nautique pour donner une orientation de référence à la base de fixation 3. Les reliefs en creux 17a, visibles sur la Fig. 2, s'étendent dans le plan de la base de fixation 3 et par suite dans le plan du logement 18 dans lequel la base de fixation 3 est insérée. Cet agencement permet d'orienter l'aile 1 perpendiculairement à la planche de sport nautique 23, 25 dans la position de dérive, Fig. 7 ou Fig. 8 et par suite, parallèlement à cette planche dans la position rabattue, Fig. 9 ou Fig. 10. Il convient de noter que les moyens de blocage 15, 17 des deux composants de charnière peuvent prendre toute orientation angulaire autour de l'axe de rotation A1, pourvu que la base de fixation 3 et l'aile 1 fixées respectivement aux deux composants de charnière 7, 5 s'étendent dans un même plan, dans la position de dérive.

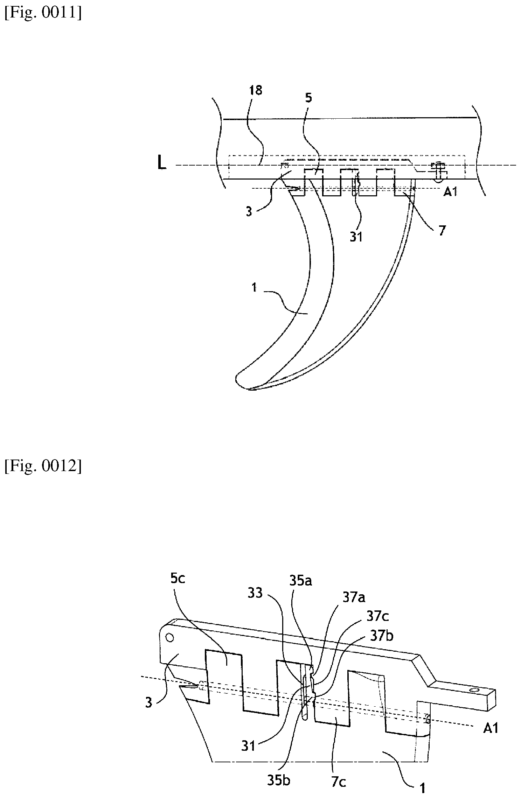

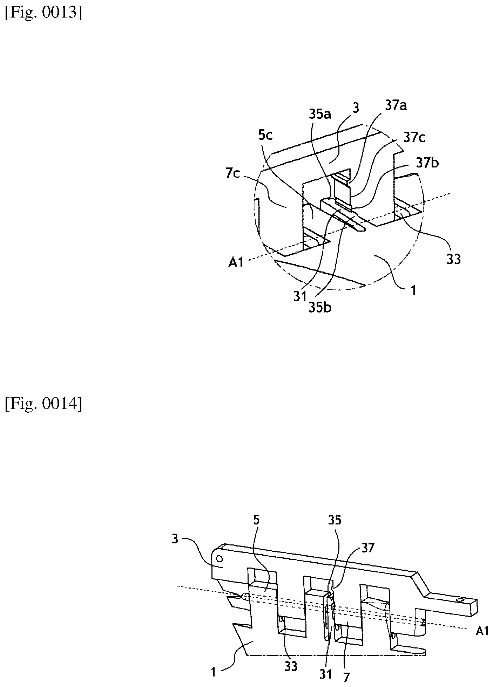

Suivant un deuxième mode de réalisation, Fig. 11, le moyen élastique est un bras de flexion 31 porté par le composant de charnière 5 fixé à l'aile 1. Ces deux éléments 31, 5 sont percés, Fig. 12 et 13, d'une lumière oblongue 33 dans laquelle est inséré l'axe de rotation A1. Le bras de flexion 31 et le composant de charnière 7 fixé à la base de fixation 3 sont pourvus de moyens de blocage en rotation 35, 37.

Les moyens de blocage 35 portés par le bras de flexion 31 du composant de charnière 5 fixé à l'aile 1 comprennent des nervures 35a, 35b. Les moyens de blocage 37 portés par le composant de charnière 7 fixé à la base de fixation 3 comprennent des nervures 37a et des rainures 37b. Dans la position de dérive, Fig. 12, ces moyens sont en prise de façon telle à disposer l'aile 1 et la base de fixation 3 dans un même plan. Les moyens de blocage 37 portés par le composant de charnière 7 fixé à la base de fixation 3 comprennent également des arêtes 37c qui viennent en prise avec les nervures 35a, 35b du bras de flexion 31 dans la position rabattue, Fig. 13.

De préférence, les nervures 37a et les nervures 37b du composant de charnière 7 fixé à la base de fixation 3 sont perpendiculaires aux arêtes 37c pour définir la position de dérive et la position rabattue perpendiculairement l'une à l'autre.

De préférence également, les deux composants de charnière comprennent des doigts 5c, 7c qui s'étendent respectivement dans le plan de l'aile 1 et de la base de fixation 3 dans la position de dérive. Le bras de flexion 31 et les moyens de blocage 35, 37 sont portés par les doigts 5c, 7c dans lesquels la lumière oblongue 33 est ménagée pour permettre un déplacement en translation du composant de charnière 5 fixé à l'aile 1 dans une position, Fig. 14, débloquée en rotation. Il convient de noter que l'une des composants de charnière peut ne comporter qu'un seul doigt.

Le bras de flexion 31 se déforme contre la translation du composant de charnière 5 fixé à l'aile 1, pour débloquer l'aile 1 de la position en dérive et la déplacer dans une position débloquée en rotation, à partir de laquelle
l'aile 1 est manoeuvrée dans la position rabattue. Inversement, le bras de flexion 31 se déforme contre une rotation autour de l'axe de rotation A1, pour débloquer l'aile 1 de la position rabattue et la déplacer dans une position débloquée en rotation à partir de laquelle l'aile 1 est manoeuvrée en translation dans la position de dérive.

L'aileron, selon ce deuxième mode de réalisation, est assemblé à une planche de sport nautique gonflable ou à coque rigide selon le même principe que celui décrit en rapport avec le premier mode de réalisation. Il convient de noter que les doigts 5c, 7c permettent avantageusement au composant de charnière 5 fixé à l'aile 1 de s'insérer dans le logement 18 du boîtier d'assemblage 19, 21 de l'objet de navigation pour renforcer le blocage en rotation de l'aile 1 dans la position de dérive, par rapport à l'effort de blocage du bras de flexion 31.

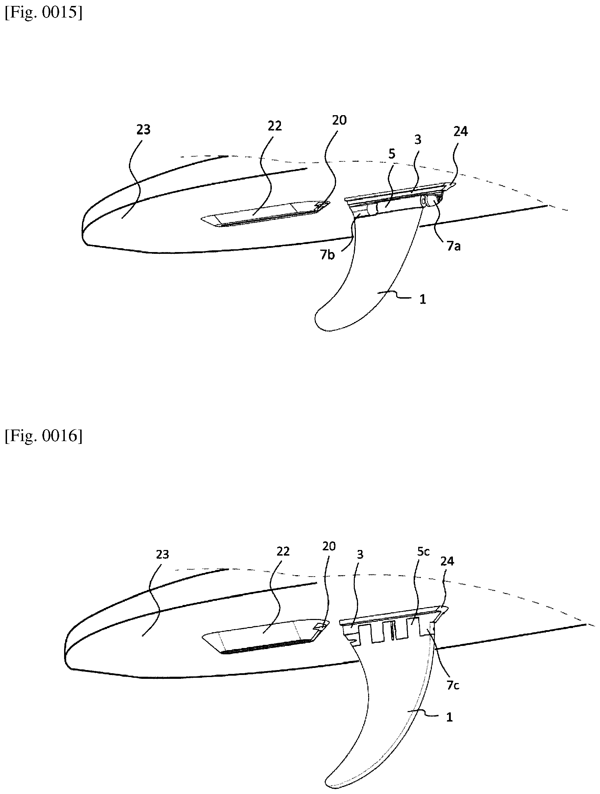

Un autre mode d'assemblage entre l'aileron et une planche de sport nautique est illustré par les figures 15 et 16, respectivement pour le premier mode et pour le deuxième mode de réalisation. La base de fixation 3 est fixée à un rail 24 destiné à s'insérer dans le logement 20 du boîtier 22. Dans le deuxième mode de réalisation, le logement 20 du boîtier
22 permet aux doigts 5c, 7c du composant de charnière 5 fixé à l'aile 1, de s'y insérer pour renforcer le blocage en rotation de l'aile 1 dans la position de dérive, par rapport à l'effort de blocage du bras de flexion 31.

Cet autre mode d'assemblage est compatible avec une planche de sport nautique tant gonflable qu'à coque rigide.

## Revendications

1. Aileron destiné à un objet de navigation, notamment une planche de nautisme gonflable ou à coque rigide, comprenant une aile (1), mobile par rapport à une base de fixation (3) autour d'un axe de rotation (A1) entre une première position dite « de dérive » et une deuxième position dite « rabattue » et des moyens de blocage en rotation (15, 17 ; 35, 37), pour bloquer l'aile (1) dans la position rabattue, l'axe de rotation (A1) étant porté par deux composants de charnière (5, 7) dont l'un (5) est fixé à l'aile (1) et l'autre (7) à la base de fixation (3), le composant de charnière (5) fixé à l'aile (1) étant également mobile en translation par rapport au composant de charnière (7) fixé à la base de fixation (3) pour débloquer l'aile (1), **caractérisé en ce que** les moyens de blocage en rotation (15, 17 ; 35, 37) sont portés par les deux composants de charnière (5, 7) pour bloquer l'aile (1) dans la position rabattue et dans la position de dérive et qu'il comprend un moyen élastique (11, 31) se déformant en compression ou en flexion contre la translation du composant de charnière (5) fixé à l'aile (1) débloquant l'aile (1) de la position de dérive.

2. Un aileron selon la revendication 1, **caractérisé en ce que** le moyen élastique est un ressort de compression (11), monté autour de l'axe de rotation (A1) entre une première partie (7a) du composant de charnière fixé à la base de fixation (3) et le composant de charnière (5) fixé à l'aile (1) et opposé aux moyens (15, 17) de blocage en rotation, portés par le composant de charnière (5) fixé à l'aile (1) et par une deuxième partie (7b) du composant de charnière fixé à la base de fixation (3), ledit ressort (11) se déformant en compression, contre la translation du composant de charnière (5) fixé à l'aile (1) pour débloquer l'aile (1) de la position de dérive ou de la position rabattue.

3. Un aileron selon la revendication 2, **caractérisé en ce que** les moyens de blocage (15, 17) comprennent des reliefs en saillie, portés par le composant de charnière (5) fixé à l'aile (1) et présentant une symétrie d'ordre deux et des reliefs en creux (17a, 17b), portés par la première partie (7a) du composant de charnière (7) fixé à la base de fixation (3) et présentant à la fois une symétrie d'ordre deux et une alternance entre un premier type (17a) et un deuxième type (17b) de relief en creux, définissant la position de dérive et la position rabattue perpendiculairement l'une à l'autre.

4. Un aileron selon la revendication 3, **caractérisé en ce que** les reliefs en creux du deuxième type (17b) sont moins étendus que ceux du premier type (17a) pour faciliter une manoeuvre en rotation, de la position rabattue à la position de dérive, en réduisant la compression dudit ressort (11) pour débloquer l'aile (1) de la position rabattue par rapport à la position de dérive.

5. Un aileron selon la revendication 4, **caractérisé en ce que** les reliefs en creux (17a, 17b) et les reliefs en saillie (15) s'étendent suivant des arêtes (17c, 15c) inclinées d'un angle (alpha) par rapport à la direction de rotation (A1) pour combiner une manoeuvre en rotation de l'aile (1) suivant l'axe de rotation (A1), avec un déplacement en translation des deux composants de charnière (5, 7) l'un par rapport à l'autre permettant de débloquer l'aile (1) de la position de dérive ou de la position rabattue.

6. Un aileron selon la revendication 1, **caractérisé en ce que** le moyen élastique est un bras de flexion (31) porté par le composant de charnière (5) fixé à l'aile (1), l'un et l'autre de ces deux éléments (31, 5) étant percés d'une lumière oblongue (33) dans laquelle est inséré l'axe de rotation (A1), les moyens de blocage (35) du composant de charnière (5) fixé à l'aile (1) étant portés par le bras de flexion (31) qui se déforme en flexion, contre la translation du composant de charnière (5) fixé à l'aile (1), pour débloquer l'aile (1) de la position en dérive et contre une rotation autour de l'axe de rotation (A1), pour débloquer l'aile (1) de la position rabattue.

7. Un aileron selon la revendication 6, **caractérisé en ce que** les moyens de blocage (35) portés par le bras de flexion (31) du composant de charnière (5) fixé à l'aile (1) comprennent des nervures (35a, 35b), les moyens de blocage (37) portés par le composant de charnière (7) fixé à la base de fixation (3) comprennent des nervures (37a) et des rainures (37b), ces moyens étant en prise de façon telle à disposer l'aile (1) et la base de fixation (3) dans un même plan dans la position de dérive, les moyens de blocage (37) portés par le composant de charnière (7) fixé à la base de fixation (3) comprenant également des arêtes (37c) qui viennent en prise avec les nervures (35a, 35b) du bras de flexion (31) dans la position rabattue.

8. Un aileron selon la revendication 7, **caractérisé en ce que** les nervures (37a) et les nervures (37b) du composant de charnière (7) fixé à la base de fixation (3) sont perpendiculaires aux arêtes (37c) pour définir la position de dérive et la position rabattue, perpendiculairement l'une à l'autre.

9. Un aileron selon la revendication 6, **caractérisé en ce que** les deux composants de charnière (5, 7) comprennent des doigts (5c, 7c) qui portent le bras de flexion (31) et les moyens de blocage (35, 37) et dans lesquels la lumière oblongue (33) est ménagée.

## Patentansprüche

1. Flosse, die für ein Navigationsobjekt, insbesondere ein aufblasbares oder starres Wasserbrett, vorgesehen ist, umfassend einen Flügel (1), der in Bezug auf eine Befestigungsbasis (3) um eine Drehachse (A1) zwischen einer ersten " stabilisierenden "Position und einer zweiten "zurückgeklappten" Position bewegbar ist, und Drehblockierungsmittel (15, 17; 35, 37) zum Blockieren des Flügels (1) in der gefalteten Position, wobei die Drehachse (A1) von zwei Scharnierbauteilen (5, 7) getragen wird, von denen einer (5) am Flügel (1) und der andere (7) an der Befestigungsbasis (3) befestigt ist, wobei das an dem Flügel (1) befestigte Scharnierbauteil (5) auch bezüglich des an der Befestigungsbasis (3) befestigten Scharnierbauteils (7) translatorisch bewegbar ist, um den Flügel (1) freizugeben, **dadurch gekennzeichnet, dass** die Drehblockierungsmittel (15, 17; 35, 37) von den beiden Scharnierbauteilen (5, 7) getragen werden, um den Flügel (1) in der zurückgeklappten Position und in der Stabilisierungsposition zu blockieren, und dass sie ein elastisches Mittel (11, 31) umfasst, das sich unter Kompression oder Biegung verformt, gegen die Translationsbewegung des Scharnierbauteils (5), das an dem Flügel (1) befestigt ist, wodurch der Flügel (1) aus der Stabilisierungsposition freigegeben wird.

2. Eine Flosse nach Anspruch 1, **dadurch gekennzeichnet, dass** das elastische Mittel eine Druckfeder (11) ist, die um die Drehachse (A1), zwischen einem ersten Teil (7a) des an der Befestigungsbasis (3) befestigten Scharnierbauteils und dem am Flügel (1) befestigten Scharnierbauteil (5), montiert ist gegenüber der Drehblockierungsmittel (15, 17; 35, 37), die von dem am Flügel (1) befestigten Scharnierbauteil (5) und einem zweiten Teil (7b) des an der Befestigungsbasis (3) befestigten Scharnierbauteils getragen werden, wobei die Feder (11) gegen die translatorische Bewegung des am Flügel (1) befestigten Scharnierbauteils (5) verformt wird, um den Flügel (1) aus der Stabilisierungsposition oder aus der zurückgeklappten Position freizugeben.

3. Eine Flosse nach Anspruch 2, **dadurch gekennzeichnet, dass** die Drehblockierungsmittel (15, 17) vorstehende Reliefs umfassen, die von dem am Flügel (1) befestigten Scharnierbauteil (5) getragen werden und eine Symmetrie der Ordnung zwei aufweisen als auch hohlen Reliefs (17a, 17b), die von dem ersten Teil (7a) des an der Befestigungsbasis (3) befestigten Scharnierbauteils (7) getragen werden und sowohl eine Symmetrie der Ordnung zwei als auch einen Wechsel zwischen einer ersten Art (17a) und einer zweiten Art (17b) aufweisen, die die Stabilisierungsposition und die zurückgeklappte Position senkrecht zueinander definieren.

4. Eine Flosse nach Anspruch 3, **dadurch gekennzeichnet, dass** sich die hohlen Reliefs der zweiten Art weniger als die der ersten Art (17a) erstrecken, um das Drehen von der zurückgeklappten Position in die Stabilisierungsposition zu erleichtern, indem die Kompression der Feder (11) verringert wird, um den Flügel (1) aus der zurückgeklappten Position in Bezug auf die Stabilisierungsposition freizugeben.

5. Eine Flosse nach Anspruch 4, **dadurch gekennzeichnet, dass** die hohlen Reliefs (17a, 17b) und die vorstehenden Reliefs (15) sich entlang von Kanten (17c, 15c) erstrecken, die einen Neigungswinkel (α) in Bezug auf die Drehachse (A1) aufweisen, um eine Drehbewegung des Flügels (1) entlang der Drehachse (A1) mit einer Translationsbewegung der beiden Scharnierbauteilen (5, 7) zueinander zu kombinieren, um den Flügel (1) aus der Stabilisierungsposition oder aus der zurückgeklappten Position freizugeben.

6. Eine Flosse nach Anspruch 1, **dadurch gekennzeichnet, dass** das elastische Mittel ein Biegearm (31) ist, der von dem am Flügel (1) befestigten Scharnierbauteil (5) getragen wird, wobei dieser beiden Elemente (31, 5) einen Langloch (33) aufweisen, in das die Drehachse (A1) eingesetzt ist, und wobei die Blockierungsmittel (35) des am Flügel (1) befestigten Scharnierbauteils (5) von dem Biegearm (31) getragen werden, der sich krümmt, gegen die Translationsbewegung des am Flügel (1) befestigten Scharnierbauteils (5), um den Flügel (1) aus der Stabilisierungsposition freizugeben als auch gegen eine Drehbewegung um die Drehachse (A1), um den Flügel (1) aus der zurückgeklappten Position freizugeben.

7. Eine Flosse nach Anspruch 6, **dadurch gekennzeichnet, dass** die Blockierungsmittel (35) des Biegearmes (31) des am Flügel (1) befestigten Scharnierbauteils (5) Rippen (35a, 35b) aufweisen, wobei die Blockierungsmittel (37) des an der Befestigungsbasis (3) befestigten Scharnierbauteils (7) Rippen (37a) und Nuten (37b) aufweisen, wobei diese Mittel eingerückt sind, um den Flügel (1) und die Befestigungsbasis (3), in der Stabilisierungsposition, in derselben Ebene anzuordnen und wobei die Blockierungsmittel (37) des an der Befestigungsbasis (3) befestigten Scharnierbauteils (7) auch Kanten (37c) aufweisen, die in der zurückgeklappten Position, mit den Rippen (35a, 35b) des Biegearms (31) in Eingriff stehen.

8. Eine Flosse nach Anspruch 7, **dadurch gekennzeichnet, dass** die Rippen (37a) und die Rippen (37b) des an der Befestigungsbasis (3) befestigten Scharnierbauteils (7) senkrecht zu den Kanten (37c) sind, um die Stabilisierungsposition und die zurückgeklappte Position senkrecht zueinander zu definieren.

9. Eine Flosse nach Anspruch 6, **dadurch gekennzeichnet, dass** die beiden Scharnierbauteile (5, 7) Zähne (5c,7c) aufweisen, die den Biegearm (31) und die Blockierungsmittel (35, 37) tragen und in denen das Langloch (33) ausgebildet ist.

## Claims

1. Fin intended for a navigation object, in particular an inflatable or rigid-shell water board, comprising a wing (1) which is able to move with respect to a fastening base (3) about an axis of rotation (A1) between a first "stabilizing" position and a second "folded" position, and rotation blocking means (15, 17; 35, 37), for blocking the wing (1) in the folded position, the axis of rotation (A1) being borne by two hinge components (5, 7), one (5) of which is fastened to the wing (1) and the other (7) to the fastening base (3), the hinge component (5) fastened to the wing (1) also being able to move translationally with respect to the hinge component (7) fastened to the fastening base (3) in order to unblock the wing (1) , **characterized in that** the rotation blocking means (15, 17; 35, 37) are borne by the two hinge components (5, 7) in order to block the wing (1) in the folded position and in the stabilizing position and **in that** it comprises an elastic means (11, 31) that deforms in compression or in bending, against the translational movement of the hinge component (5) fastened to the wing (1), unblocking the wing (1) from the stabilizing position.

2. A fin according to claim 1, **characterized in that** the elastic means is a compression spring (11) mounted about the axis of rotation (A1), between a first part (7a) of the hinge component fastened to the fastening base (3) and the hinge component (5) fastened to the wing (1) and opposite the rotation blocking means (15, 17), borne by the hinge component (5) fastened to the wing (1) and by a second part (7b) of the hinge component fastened to the fastening base (3), said spring (11) deforming in compression against the translational movement of the hinge component (5) fastened to the wing (1) in order to unblock the wing (1) from the stabilizing position or from the folded position.

3. A fin according to claim 2, **characterized in that** the blocking means (15, 17) comprise projecting reliefs, borne by the hinge component (5) fastened to the wing (1) having a symmetry of order two and hollow reliefs (17a, 17b), borne by the first part (7a) of the hinge component (7) fastened to the fastening base (3) and having both a symmetry of order two and an alternation between a first type (17a) and a second type (17b) of hollow relief, defining the stabilizing position and the folded position perpendicular to each other.

4. A fin according to claim 3, **characterized in that** the hollow reliefs of the second type (17b) extend less than those of the first type (17a), to make it easier to rotate from the folded position to the stabilizing position, by reducing the compression of said spring (11) to unblock the wing (1) from the folded position with respect to the stabilizing position.

5. A fin according to claim 4, **characterized in that** the hollow reliefs (17a, 17b) and the projecting reliefs (15) extend along edges (17c, 15c) inclined by an angle (alpha) with respect to the direction of rotation (A1) to combine a rotational movement of the wing (1) along the axis of rotation (A1), with a translational movement of the two hinge components (5, 7) with respect to each other in order to unblock the wing (1) from the stabilizing position or from the folded position.

6. A fin according to claim 1, **characterized in that** the elastic means is a bending arm (31) borne by the hinge component (5) fastened to the wing (1), both of these two elements (31, 5) being pierced by an oblong hole (33) into which the axis of rotation (A1) is inserted, the means (35) for blocking the hinge component (5) fastened to the wing (1) being borne by the bending arm (31), which deforms in bending, against the translational movement of the hinge component (5) fastened to the wing (1) in order to unblock the wing (1) from the stabilizing position and against a rotational movement about the axis of rotation (A1), in order to unblock the wing (1) from the folded position.

7. A fin according to claim 6, **characterized in that** the blocking means (35) borne by the bending arm (31) of the hinge component (5) fastened to the wing (1) comprise ribs (35a, 35b), the blocking means (37) borne by the hinge component (7) fastened to the fastening base (3) comprise ribs (37a) and grooves (37b), these means being engaged so as to arrange the wing (1) and the fastening base (3) in the same plane in the stabilizing position, the blocking means (37) borne by the hinge component (7) fastened to the fastening base (3) also comprising edges (37c) which engage with the ribs (35a, 35b) of the bending arm (31) in the folded position.

8. A fin according to claim 7, **characterized in that** the ribs (37a) and the ribs (37b) of the hinge component (7) fastened to the fastening base (3) are perpendicular to the edges (37c) to define the stabilizing position and the folded position, perpendicular to each other.

9. A fin according to claim 6, **characterized in that** the two hinge components (5, 7) comprise teeth (5c, 7c) which bear the bending arm (31) and the blocking means (35, 37) and in which the oblong hole (33) is formed.
